# EUROPEAN PATENT SPECIFICATION

(11) **EP 1 748 510 B1**
(45) Date of publication and mention of the grant of the patent: **01.04.2009**
(21) Application number: 06018221.9
(22) Date of filing: 28.01.2004
(51) Int. Cl.: H01M 8/02

(54) **Fuel cell**
Brennstoffzelle
Pile à combustible

(30) Priority: 31.01.2003 JP 2003023712
(43) Date of publication of application: 31.01.2007
(62) Divisional of application: 04705889.6
(73) Proprietor: NISSAN MOTOR CO., LTD., Yokohama-shi, Kanagawa 221-0023 (JP)
(72) Inventor: Shimoi, Ryoichi, Yokohama-shi Kanagawa 236-0052 (JP); Miyazawa, Atsushi, Yokohama-shi Kanagawa 233-0011 (JP)
(74) Representative: Grünecker, Kinkeldey, Stockmair & Schwanhäusser Anwaltssozietät

(56) References cited:
- EP-A- 1 265 303
- JP-A- 8 096 820
- US-A1- 2002 012 827
- PATENT ABSTRACTS OF JAPAN vol. 2003, no. 07, 3 July 2003 (2003-07-03) & JP 2003 086197 A (TOYOTA MOTOR CORP), 20 March 2003 (2003-03-20)

## Description

The present invention relates to a fuel cell according to the preamble part of independent claim 1. In particular, the present invention relates to a fuel cell with a membrane electrode assembly that includes an electrolyte membrane and porous electrodes respectively located on both sides of the electrolyte membrane; the membrane electrode assembly being sandwiched by an anode side separator positioned on one surface thereof and a cathode side separator positioned on the other surface thereof.

Japanese Unexamined Patent Publication No. 2001-319667 discloses a structure of a fuel cell, in which a solid polymer electrolyte membrane of a membrane electrode assembly is formed to have its outer peripheral portion projected out relative to a periphery of the porous electrodes, and a fluid sealant is used to fill a gap between the outer peripheral portion of the solid polymer electrolyte membrane and separators which sandwich the membrane electrode assembly.

Each of Japanese Unexamined Patent Publications 10-50332, 2002-42838, 2002-93434, and 2001-155745 discloses a structure of an outer peripheral separator-sandwiched portion of a solid polymer electrolyte membrane, as well as a seal member and a gasket provided around porous electrodes, for avoiding gas leakage from a peripheral portion of a membrane electrode assembly.

In a fuel cell, a pair of separators are arranged to sandwich a membrane electrode assembly therebetween. Each of the separators is formed to have a gas flow path having a channel-shape in section on its surface opposite to one of porous electrodes of the membrane electrode assembly. The gas flow path is mainly classified into, largely due to the shape thereof, a serpentine flow path that is a continuous flow path having many winding portions, and an interdigitated flow path that includes a main flow path and a plurality of branch flow paths branching from the main flow path. In the serpentine flow path, as a reaction gas supplied thereto flows through the winding portions thereof, the reaction gas seeps out the winding portions, passes through parts of the porous electrode close to the winding portions, and short-circuits between the winding portions of the gas flow path on a reaction surface of the porous electrode. As a result, the reaction gas is not evenly supplied to the entire reaction surface of the porous electrode and the reaction surface thereof cannot be used efficiently. Also in the interdigitated flow path, a reaction gas passes through part of the porous electrode, thereby preventing efficient use of the reaction surface thereof. The present invention was made in light of the above problems.

JP 08096820 discloses a fuel cell according to the preamble part of independent claim 1. Therein, a fuel cell comprises an electrolyte membrane which is disposed between two gas diffusion electrodes. A collector has ribs which are formed so as to define gas passages therebetween in which a reaction gas flows. On the respective ribs, projections for pressing the gas diffusion electrode are provided, wherein said projections extend in a longitudinal direction of the ribs.

It is an objective of the present invention to provide a fuel cell which evenly supplies a reaction gas to the entire reaction surface of a porous electrode thereof, thus using the reaction surface thereof efficiently.

According to the present invention, said objective is solved by a fuel cell having the combination of features of claim 1.

Preferred embodiments are laid down in the subclaims.

In the following, the present invention is explained in greater detail by means of embodiments thereof in conjunction with the accompanying drawings, wherein:
Fig. 1 is a cross sectional view showing a structure of a first solid polymer electrolyte fuel cell not having all the features of the present invention.
Fig. 2 is a perspective view of an anode side separator of the first fuel cell, showing a projection provided on a rib thereof.
Fig. 3 is a graph showing an example of gas diffusion inside a porous electrode of the first fuel cell and a related art having no projection.
Fig. 4 is a cross sectional view showing a structure of a second solid polymer electrolyte fuel cell not having all the features of the present invention.
Fig. 5 is a perspective view of a third anode side separator not having all the features of the present invention.
Fig. 6 is a perspective view of a fourth anode side separator not having all the features of the present invention.
Fig. 7 is a plan view showing a pattern of gas flow paths formed in a fifth anode side separator of the solid polymer electrolyte fuel cell not having all the features of the present invention.
Fig.8 is a plan view showing a pattern of gas flow paths formed in a sixth anode side separator of the solid polymer electrolyte fuel cell not having all the features of the present invention.
Fig. 9 is a plan view showing a pattern of gas flow paths formed in a seventh anode side separator of the solid polymer electrolyte fuel cell not having all the features of the present invention.
Fig. 10 is a plan view showing a pattern of gas flow paths formed in an eighth anode side separator of the solid polymer electrolyte fuel cell not having all the features of the present invention.
Fig. 11 is a plan view showing a pattern of gas flow paths formed in a ninth anode side separator of the solid polymer electrolyte fuel cell not having all the features of the present invention.
Fig. 12 is a perspective view of a tenth anode side separator not having all the features of the present invention.
Fig. 13 is a perspective view of an eleventh anode side separator not having all the features of the present invention.
Fig. 14 is a perspective view of a twelfth anode side separator not having all the features of the present invention.
Fig. 15 is a perspective view of an anode side separator according to a thirteenth embodiment of the present invention.
Fig. 16 is a perspective view of an anode side separator according to a fourteenth embodiment of the present invention.
Fig. 17 is a cross sectional view showing a structure of a fifteenth solid polymer electrolyte fuel cell not having all the features of the present invention.
Fig. 18 is a cross sectional view showing a structure of a sixteenth solid polymer electrolyte fuel cell not having all the features of the present invention.
Fig. 19 is a cross sectional view showing a structure of a seventeenth solid polymer electrolyte fuel cell not having all the features of the present invention.
Fig. 20 is a perspective view of an eighteenth anode side separator not having all the features of the present invention.
Fig. 21 is a perspective view of a nineteenth anode side separator not having all the features of the present invention.
Fig. 22 is a perspective view of a twentieth anode side separator not having all the features of the present invention.
Fig. 23 is a perspective view of a twenty-first anode side separator not having all the features of the present invention.

Embodiments, some being the subject-matter of patent EP 1 588 447 B1, will be explained below with reference to the drawings, wherein like members are designated by like reference characters.

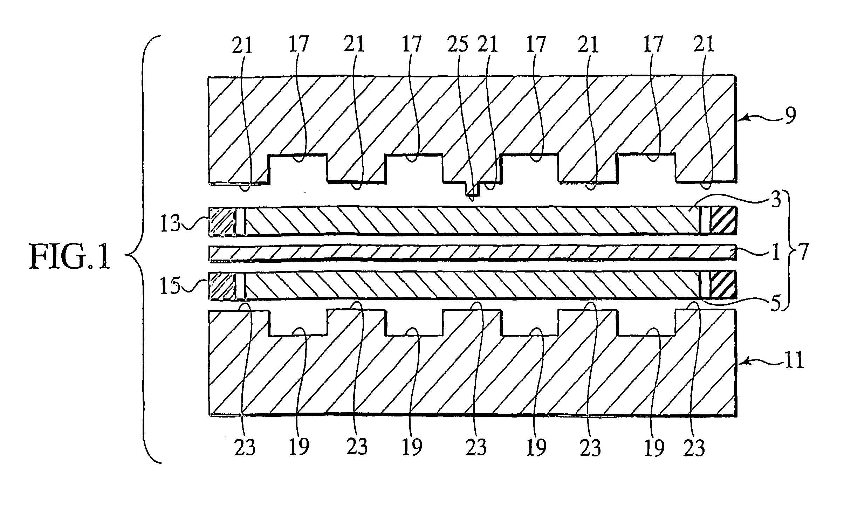

As shown in Fig. 1, in a first solid polymer electrolyte fuel cell not having all the features of the present invention, porous electrodes 3,5 as porous diffusion layers are located on both sides of a solid polymer electrolyte membrane 1 to collectively form a membrane electrode assembly 7. An anode side separator 9 is located on one surface of the membrane electrode assembly 7 and a cathode side separator 11 is located on the other surface thereof, whereby the membrane electrode assembly 7 is sandwiched by the separators 9,11.

At the peripheries of the porous electrodes 3, 5, annular gaskets 13, 15 are provided, each being interposed between one of the separators 9, 11 and the solid polymer electrolyte membrane 1, thereby sealing a reaction gas therein such as a fuel gas containing hydrogen, or an oxidant gas containing oxygen.
The solid polymer electrolyte membrane 1 is formed as a proton exchange membrane made of a solid polymer material such as fluorine family resin. Two porous electrodes 3, 5 located on both surfaces of the membrane 1 are constituted of carbon cloth or carbon paper containing a catalyst made of platinum, or platinum and an other metal, and are positioned such that the surfaces thereof containing the catalyst come into contact with the solid polymer electrolyte membrane 1.
Each of the separators 9, 11 is made of dense carbon material or metal material inpenetratable to gas, where an anode side gas flow path 17 for the fuel gas and a cathode side gas flow path 19 for the oxidant gas are respectively formed on the surface of each separator opposite to the membrane electrode assembly 7. As a result of forming the gas flow paths 17, 19 in each of the separators 9, 11, a rib 21 is formed between a pair of gas flow paths 17 and a rib 23 is formed between a pair of gas flow paths 19. Each of the separators 9, 11 is also formed to have a cooling water flow path, not illustrated, on a surface thereof opposite to the surface where the gas flow path 17, 19 is formed. In the cathode side separator 11, another cooling water path is provided for removing heat generated by cathode reaction in the fuel cell.

The fuel cell mentioned above is used in a stack structure which is formed by stacking a plurality of cells together. Each of cells is constituted of a membrane electrode assembly 7 and a pair of the separators 9, 11 located on both the surfaces thereof. The cooling water flow path mentioned above is not necessarily provided for each cell. However, if more heat needs to be removed from the fuel cell due to an increased output thereof, it is preferable to provide as many cooling water flow paths as possible.

In the fuel cell having the stack structure mentioned above, the fuel gas and the oxidant gas are supplied from respective gas inlets of the fuel cell, distributed to the respective cells thereof, and discharged from respective gas outlets thereof to the outside.

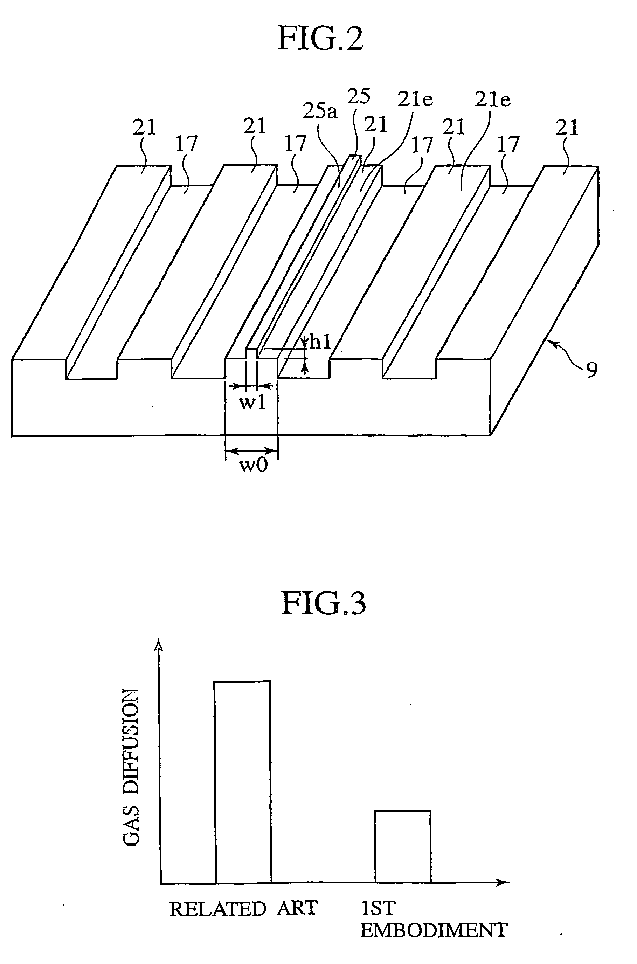

As shown in Fig. 2, a projection 25 is located on one of a plurality of ribs 21 disposed in the anode side separator 9. The projection 25 is formed along the entire length of the rib 21, positioned in the center of the width w0 of the rib 21 on a top face 21e thereof, which comes into contact with the membrane electrode assembly 7. The width of the projection 25 is set as a predetermined value w1 and the height thereof is set as a predetermined value h1. A top portion 25a of the projection 25 that compresses the porous electrode 3 is formed to be planar.

As described above, since the projection 25 is disposed on the rib 21 of the anode side separator 9, when the membrane electrode assembly 7 is sandwiched by the separators 9, 11, the portion of the porous electrode 3 where the projection 25 comes into contact with, is compressed with an increasing local stress thereupon until it becomes crushed. As a result, resistance for the fuel gas to pass through the compressed portion of the porous electrode 3 increases.

Accordingly, when such a projection 25 is provided on the rib 21 at a location where the fuel gas tends to short-circuit between a pair of the gas flow paths 17 across the rib 21, the fuel gas supplied is guided to flow along the gas flow path 17, whereby the fuel gas is evenly distributed to the reaction surface of the porous electrode 3. Therefore, the reaction surface thereof can be efficiently used, thereby improving performance and fuel economy of the fuel cell.

The provision of the projection 25 on the rib 21 also improves contact condition between the anode side separator 9 and the porous electrode 3, reducing contact resistance therebetween, as well as preventing the relative slide shifting between the anode side separator 9 and the porous electrode 3 in the surface direction thereof.

Fig. 3 shows an example of gas diffusion inside the porous electrode embodiment compared to the related art having no projection on the rib. Note, that gas diffusion varies depending upon the kind of the porous electrode, magnitude of joint force between the separator and the porous electrode, and the size and shape of the projection.

As mentioned above, the height (h1) of the projection 25 on the rib 21 is set as 0.1mm, and the width (w1) thereof is set as 0.5 mm. Provision of the projection in such size on the rib, as compared with the related art, effectively reduces gas diffusion inside the porous electrode, thereby reducing an amount of the short-circuited gas.

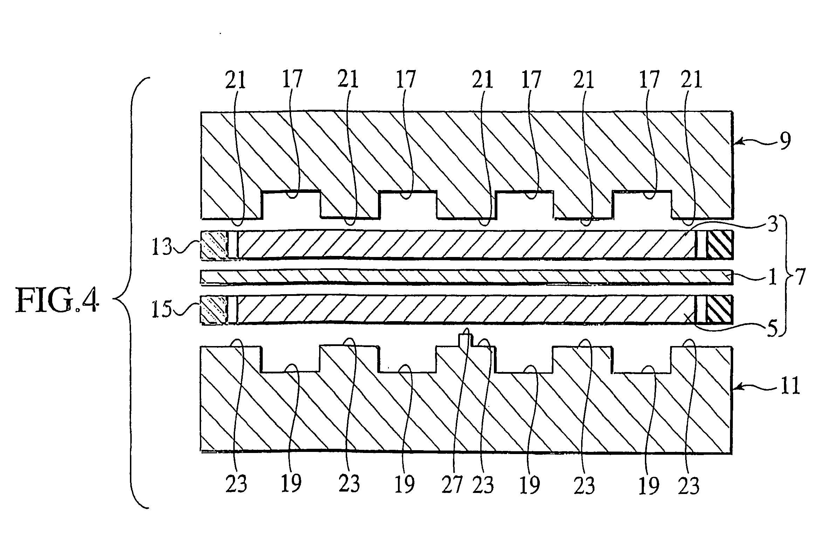

Fig. 4 is a cross sectional view of a second solid polymer electrolyte fuel cell not having all the features of the present invention. Therein, a projection 27, identical to the projection 25 shown in the first fuel cell, is provided on a rib 23 of a cathode side separator 11. The components in the fuel cell of Figure 4 other than the projection 27 are the same as those of the first fuel cell.

Since the projection 27 is disposed on the rib 23 of the cathode side separator 11, when the membrane electrode assembly 7 is sandwiched by the separators 9 and 11, the portion of the porous electrode 5 where the projection 27 on the rib 23 comes into contact with, is compressed with increasing local stress thereupon until it becomes crushed. As a result, it prevents the oxidant gas in a gas flow path 19 from diffusing in the compressed portion of the porous electrode 5, thereby promoting flow of the oxidant gas along the gas flow path 19. Accordingly, the second fuel cell can obtain the same effect as in the first fuel cell.

In the first and second fuel cells, the projection 25 or 27 is disposed on either the rib 21 of the anode side separator 9 or the rib 23 of the cathode side separator 11. However, the projection may be disposed on both of the ribs 21 and 23.

Installation of the projection 25 or 27 on one of the rib 21 of the anode side separator 9 and the rib 23 of the cathode side separator 11, as in the first and second fuel cells, enables the selective restraint of diffusion of the fuel gas in the gas flow path 17 and the oxidant gas in the gas flow path 19.

Further, either one of the anode side separator 9 and the cathode side separator 11 can be manufactured in a shape without any projection on the rib, and therefore the manufacturing cost thereof can be reduced in comparison with the structure where the projections are located on the ribs of both the anode side separator 9 and the cathode side separator 11.

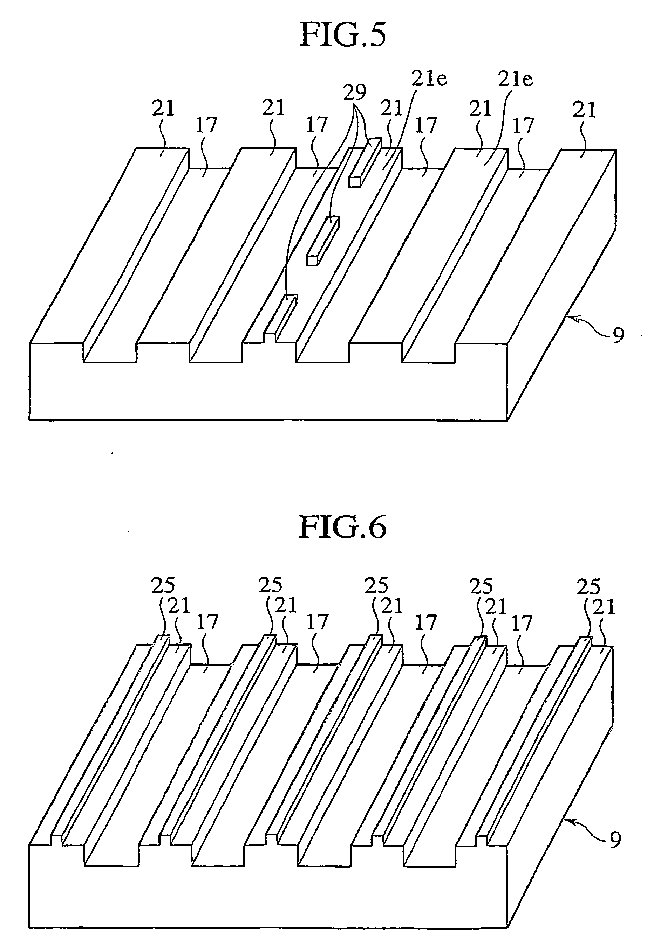

Fig. 5 is a perspective view of an anode side separator 9 of a third solid polymer electrolyte fuel cell not having all the features of the present invention. In the third fuel cell, a plurality of projections 29 are located on one of top faces21e of the ribs 21, which come into contact with a membrane electrode assembly 7. Each of the projections 29 extends in the longitudinal direction of the ribs 21.

In the third fuel cell, the plurality of the projections 29 can be located in a spot where a reaction gas flowing in a gas flow path 17 is likely to short-circuit to another neighboring gas flow path 17 across the rib 21. Accordingly, the manufacturing cost can be reduced compared with the first or the second fuel cell.

In the third fuel cell, the projection 29 applied to the anode side separator 9 is explained, however, the projection 29 may be applied to a cathode side separator 11, or to both the anode side separator 9 and the cathode side separator 11.

In fuel cells to be described below, explanations will be made for applications of the projection mainly to the anode side separator 9. However, the projection may be applied to the cathode side separator 11, or to both of the separators 9 and 11, similarly to the third fuel cell.

Fig. 6 is a perspective view of an anode side separator 9 in a fourth solid polymer electrolyte fuel cell not having all the features of the present invention. In the fourth fuel cell, a plurality of projections 25 are provided on all the ribs 21 of the anode side separator 9, where all the projections 25 are formed along the longitudinal direction of the ribs 21.

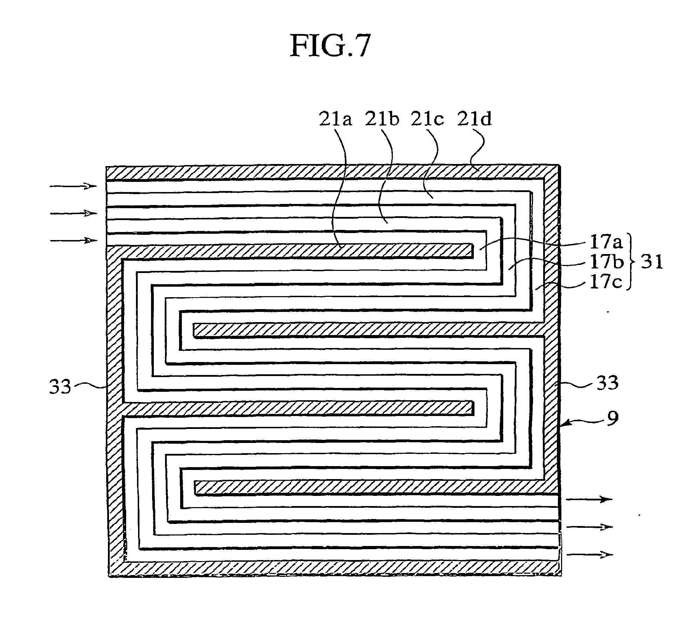

Fig. 7 is a plan view showing a pattern of gas flow paths 17a, 17b, and 17c in an anode side separator 9 of a fifth solid polymer electrolyte fuel cell not having all the features of the present invention. This gas flow path pattern is what is called a serpentine flow path, namely, a snaking gas flow path bundle 31 formed of a plurality of parallel gas flow paths 17a, 17b, and 17c. A rib 21 b is located between the gas flow path 17a and the gas flow path 17b, and a rib 21c is located between the gas flow path 17b and the gas flow path 17c. A rib 21a is located outside of the gas flow path 17a and a rib 21d are located outside of the gas flow path 17c to define the snaking pattern of the gas flow path bundle 31.

Projections 33 are located on the ribs 21a and 21d that collectively define the gas flow path bundle 31. Crosshatched portions in Fig. 7 shows the positions of the projections 33.

In the fifth fuel cell, the projections 33 are located on the outermost ribs 21a and 21d defining the gas flow path bundle 31, to thereby avoid leakage of the reaction gas from the gas flow path bundle 31 to the outside, as well as to reduce short-circuiting of the reaction gas from the gas flow path bundle 31 across the ribs 21 a and 21d to the neighboring gas flow bundle 31.

And by making the projections 33 on the ribs 21a and 21d as wide and as tall as downstream side of the gas flow path, the short-circuit of the reaction gas between the gas flow path bundles can be reduced more certainly.

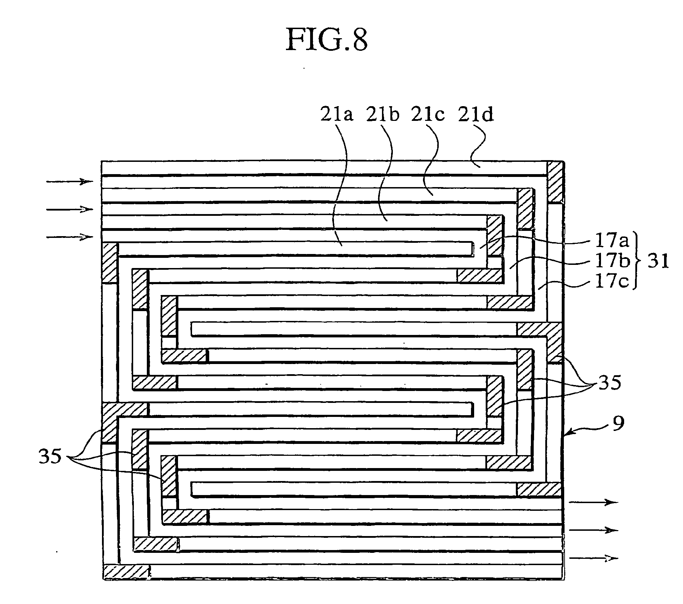

Fig. 8 shows a sixth fuel cell not having all the features of the present invention, wherein in a serpentine flow path identical to that in Fig. 7, projections 35 are located on the ribs 21a, 21b, 21c, 21d at the bending corners of the gas flow paths 17a, 17b, 17c, where flow of the reaction gas therein changes its direction. Crosshatched portions in Fig. 8 show the positions of the projections 35 on the ribs 21a, 21b, 21c, and 21d.

In the above-mentioned sixth fuel cell, the short-circuiting of the reaction gas between the gas flow paths can be reduced at the bending corners thereof where the reaction gas is more likely to short-circuit.

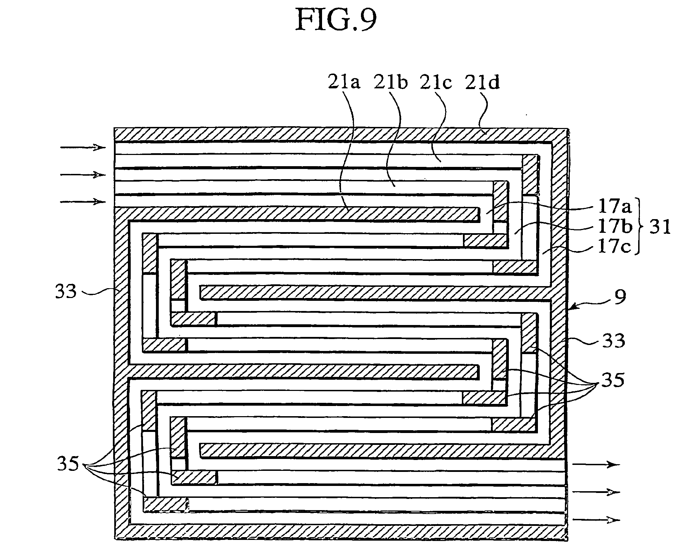

Fig. 9 shows a seventh fuel cell not having all the features of the present invention, which is a combination of the fifth fuel cell in Fig. 7 and the sixth fuel cell in Fig. 8.

According to the seventh fuel cell, an amount of gas short-circuited between each of the gas flow paths can be reduced further compared with each of the fuel cells shown in Fig. 7 and Fig. 8. On the other hand, each of the fuel cells in Fig. 7 and Fig. 8 can reduce an amount of the gas short-circuited between the gas flow paths more efficiently with minimal number of the projections 33,35 as compared to the seventh fuel cell.

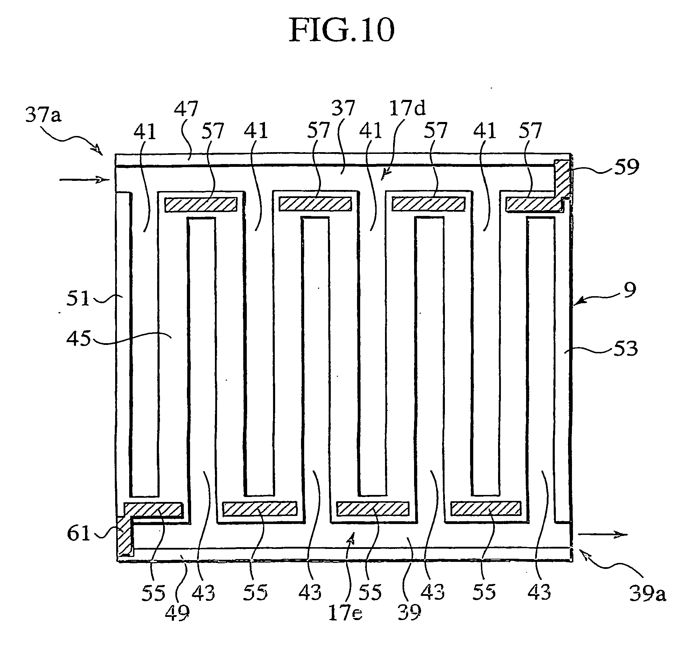

Fig. 10 is a plan view showing a pattern of a gas flow path in an anode side separator 9 of an eight solid polymer electrolyte fuel cell not having all the features of the present invention. This flow pattern is formed of a pair of interdigitated-gas flow paths 17d and 17e. The gas flow path 17d is formed of a main flow path 37 extending in the left and right directions of Fig. 10 in an upper portion of the anode side separator 9, and a plurality of branch flow paths 41 branched in the downward direction in Fig. 10 along the entire length of the main flow path 37. On the other hand, the gas flow path 17e is formed of a main flow path 39 extending in the left and right directions of Fig. 10 in a lower portion of the separator 9, and a plurality of branch flow paths 43 branched in the upward direction in Fig. 10 along the entire length of the main flow path 39. The respective branch flow paths 41, 43 are alternately located along the longitudinal direction of the main flow paths 37, 39. The pair of the interdigitated-gas flow paths thus form what is called an interdigitated flow path.

A rib 45 is located between the gas flow paths 17d and 17e, having a shape that is serpentine in the upward and downward directions in Fig. 10. Straight ribs 47, 49 are provided along upper and lower ends of the anode side separator 9 in Fig. 10, and straight ribs 51, 53 are provided along left and right ends thereof. In this interdigitated flow path, a reaction gas flows into the gas flow path 17d from a supply port 37a provided between the left end of the rib 47 and the upper end of the linear rib 51, and the reaction gas inside the gas flow path 17e flows out of the separator 9 from a discharge port 39a provided between the right end of the rib 49 and the lower end of the rib 53.

And projections 55, 57 are located on winding portions of the rib 45 at the ends of the branch flow paths 41, 43. Projections 59, 61 are respectively located on a part of the straight rib 53 at the end of the main flow path 37 downstream thereof, and on a part of the straight rib 51 at the end of the main flow path 39 upstream thereof. Crosshatched portions in Fig. 10 show the positions of the projections 55, 57 on the rib 45 and the projections 59, 61 on the ribs 53, 51.

Since the projections 55, 57 are respectively disposed in positions where the reaction gas easily short-circuits from the ends of the branch flow paths 41, 43 to the main flow paths 39, 37, as well as the projections 59, 61 being respectively disposed in positions where the reaction gas easily leaks from the ends of the main flow paths 37, 39 to the outside, an amount of short-circuited reaction gas can be reduced and the leakage of reaction gas to the outside can be prevented.

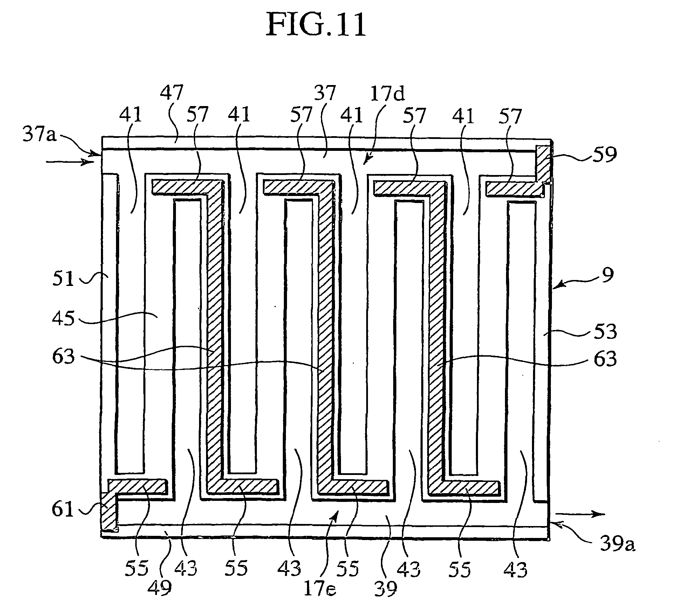

Fig. 11 shows a ninth fuel cell not having all the features of the present invention. In an interdegutated flow path identical to that in Fig. 10, a projection 63 is provided on a rib 45, in addition to the projections 55, 57, 59, and 61 of Fig. 10. The projection 63 is formed to be continuous from a left end of a projection 55 to a right end of a projection 57. Namely, the projection 63 disposed on a straight portion of the rib 45, which constitutes both a wall on a supply port side (the left side in Fig. 11) of the branch flow path 41 from the gas flow path 17d and a wall on a discharge port side (the right side in Fig. 11) of the branch flow path 43 from the gas flow path 17e.

Thereby, short-circuiting of the reaction gas from the branch flow path 41 for supplying gas to the branch flow path 43 for discharging gas, positioned on the discharge port side (the left side in Fig. 11) can be prevented. The flow of reaction gas is promoted at a region of the rib 45 where no projection is located, and therefore, the reaction gas can spread and evenly flow inside a porous electrode 3 in a specific direction.

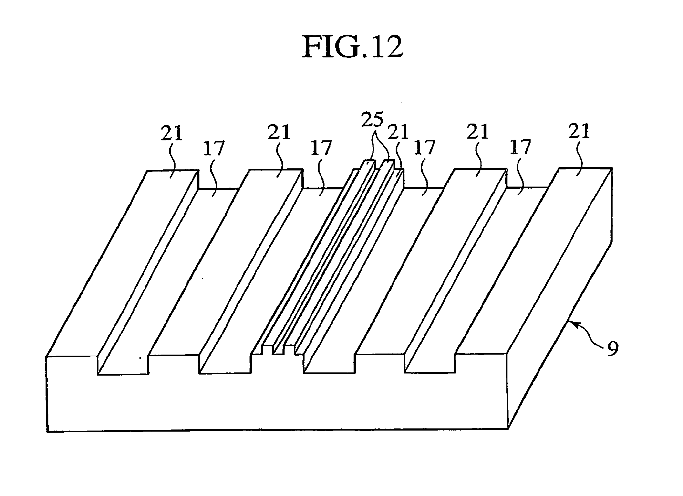

Fig. 12 is a perspective view of an anode side separator 9 in a tenth solid polymer electrolyte fuel cell not having all the features of the present invention. In the tenth fuel cell, a plurality of projections 25 (two projections herein) are located on one of the ribs 21. The respective projections 25 are arranged in parallel with each other along the longitudinal direction of the rib 21.

In the tenth fuel cell, by locating the plurality the projections 25, the portions of a porous electrode 3 where the plurality of the projections 25 are located can be easily compressed and thereby passage of short-circuited gas through the porous electrode 3 can be securely and stably reduced.

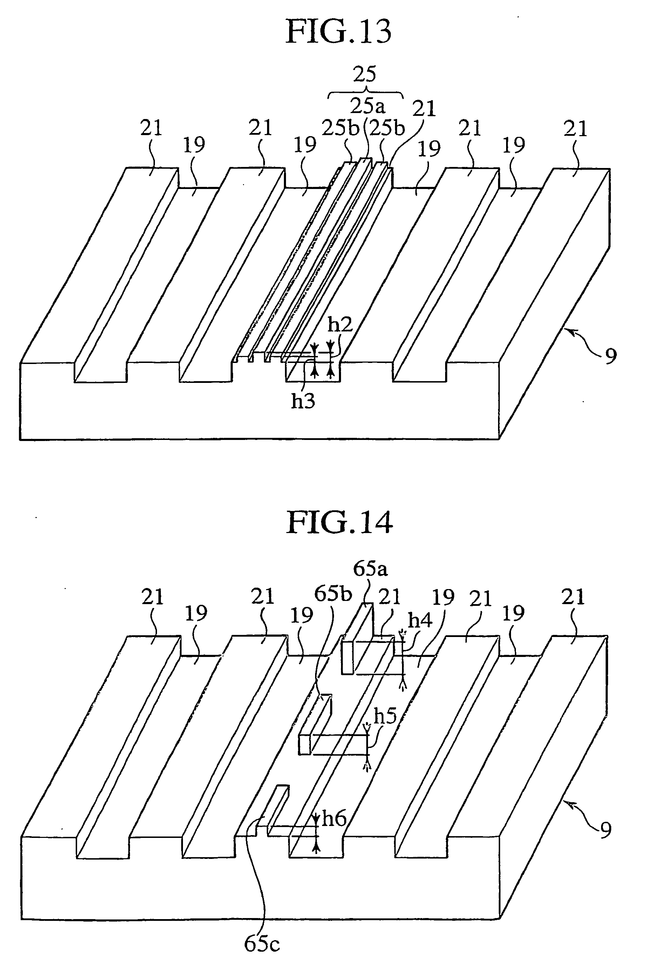

Fig. 13 is a perspective view of an anode side separator 9 in an eleventh solid polymer electrolyte fuel cell not having all the features of the present invention. In the eleventh fuel cell, a plurality of projections 25 (three projections in this fuel cell) are located on the rib 21 in parallel with each other along the longitudinal direction of the rib 21, and a height (h2) of a central projection 25a among the three projections 25 is more than a height (h3) of projections 25b on both sides thereof.
However, the two projections 25b may be different in height (h3) from each other.

Fig. 14 is a perspective view of an anode side separator 9 in a twelfth solid polymer electrolyte fuel cell not having all the features of the present invention. In the twelfth fuel cell, a plurality of projections 65a, 65b, 65c (three projections in this fuel cell) are arranged along the longitudinal direction of the rib 21 thereon, and a height (h4) of the projection 65a, a height (h5) of the projection 65b, and a height (h6) of the projection 65c are different from each other.

In Fig. 12 and Fig. 13, the respective heights of the plurality of projections are different from each other, but the respective widths may be different from each other and both the heights and the widths may be different from each other.
As described in the eleventh fuel cell and the twelfth fuel cell, at least one of the height and the width of the plurality of the projections 25a, 25b and the projections 65a, 65b, 65c on the rib 21 is different from the others, thereby enabling a selective adjustment of gas diffusion inside the porous electrode 3. Accordingly, in these fuel cells, an amount of short-circuited gas can be more efficiently reduced than in the first fuel cell. Herein, an amount of short-circuited gas is reduced further as the projections become taller or wider. And the height and the width of such projections may be changed depending on a gas flow velocity in the gas flow path.

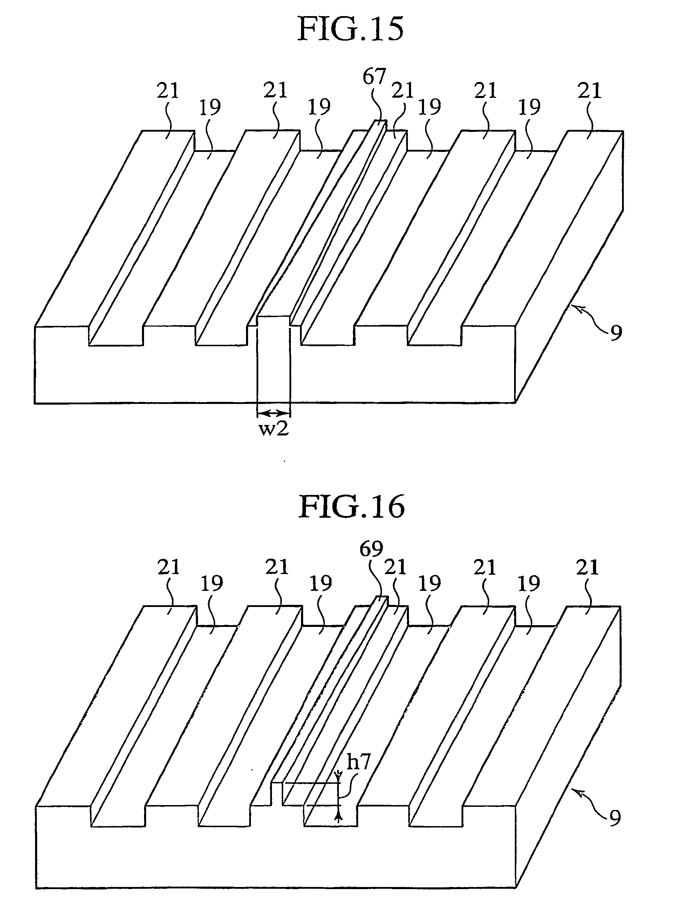

Fig. 15 is a perspective view of an anode side separator 9 of a solid polymer electrolyte fuel cell according to a thirteenth embodiment. In the thirteenth embodiment, a width (w2) of a projection 67 located on a rib 21 continuously changes along the longitudinal direction of the rib 21.

Fig. 16 is a perspective view of an anode side separator 9 of a solid polymer electrolyte fuel cell according to a fourteenth embodiment. In the fourteenth embodiment, a height (h7) of a projection 69 located on a rib 21 continuously changes along the longitudinal direction of the rib 21.

In the thirteenth embodiment and the fourteenth embodiment, a size (at least one of the height and the width) of the projections 67, 69 continuously changes, thereby enabling continuous and selective adjustment of gas diffusion inside the porous electrode 3. Accordingly in these embodiments, an amount of the short-circuited gas can be more efficiently reduced than in the first fuel cell.

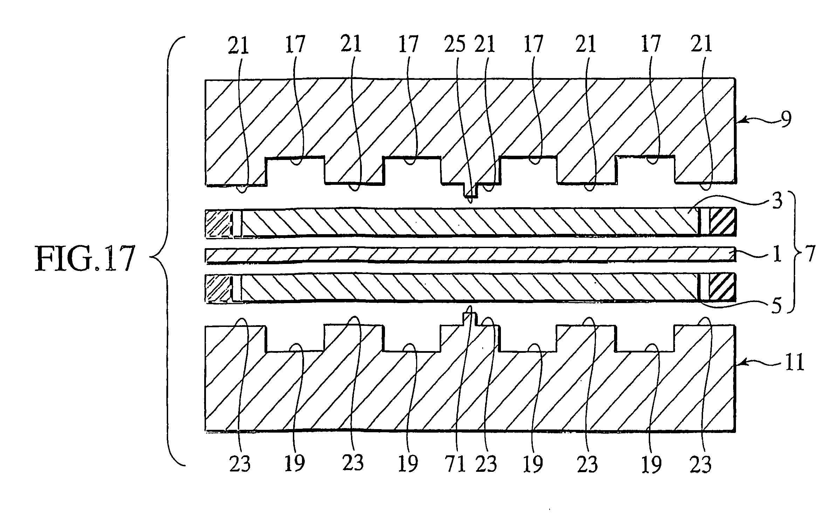

Fig. 17 is a cross sectional view of a fifteenth solid polymer electrolyte fuel cell not having all the features of the present invention. In the fifteenth fuel cell, a projection 71 is located on a rib 23 of a cathode side separator 11. The rib 23 is located opposite to the rib 21 of the anode side separator 9 of the first fuel cell, where the projection 25 is located. The projection 71 on the rib 23 is identical in shape to the projection 25 on the rib 21.

According to the fifteenth fuel cell, the projection 25 of the anode side separator 9 is located opposite to the projection 71 of the cathode side separator 11 and thereby an amount of the short-circuited gas can be reduced in both of the porous electrodes 3,5.

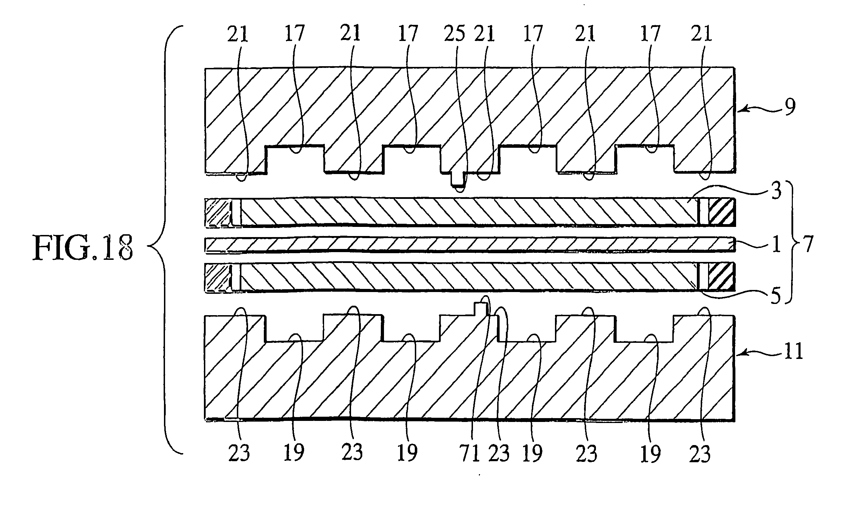

Fig. 18 is a cross sectional view of a sixteenth solid polymer electrolyte fuel cell not having all the features of the present invention. In the sixteenth fuel cell, a projection 25 of an anode side separator 9 and a projection 71 of a cathode side separator 11 are shifted in a width direction apart from each other along a surface of a membrane electrode assembly 7. The projection 25 of the separator 9 is shifted from a point opposite to the projection 71 of the separator 11.

According to the sixteenth fuel cell, an amount of the short-circuited gas can be reduced in both of the porous electrodes 3,5 similarly to the fifteenth embodiment.

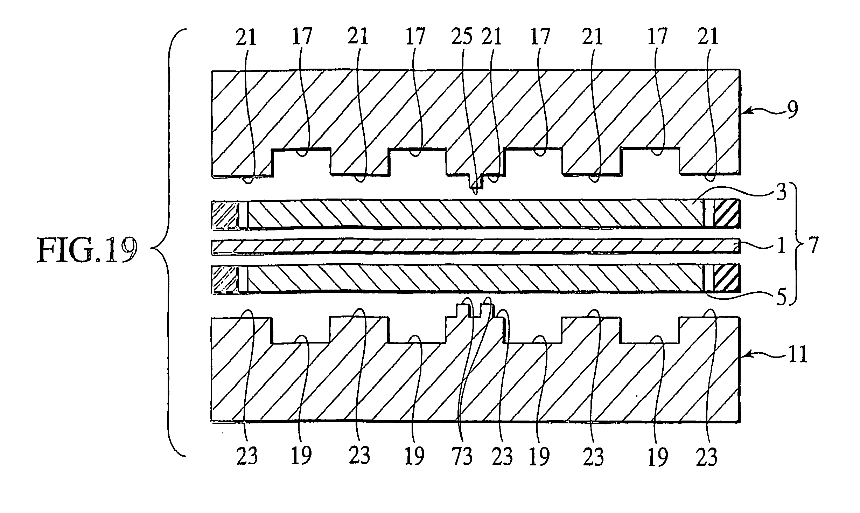

Fig. 19 is a cross sectional view of a seventeenth solid polymer electrolyte fuel cell not having all the features of the present invention. In the seventh fuel cell, two projections 73 are located on a rib 23 of a cathode side separator 11.
The rib 23 is positioned opposite to a rib 21 of an anode side separator 9, where a projection 25 is formed thereon. The two projections 73 are formed along the longitudinal direction of the rib 23 similarly to the projection 25, and are located on the rib 23 at positions in a width direction of the rib 23, corresponding to both side positions of the projection 25 on the rib 21.

According to the seventeenth fuel cell mentioned above, the portions of the porous electrodes 3,5 corresponding to the above-mentioned projections can be crushed with more certainty, thereby more securely reducing an amount of short-circuited gas.

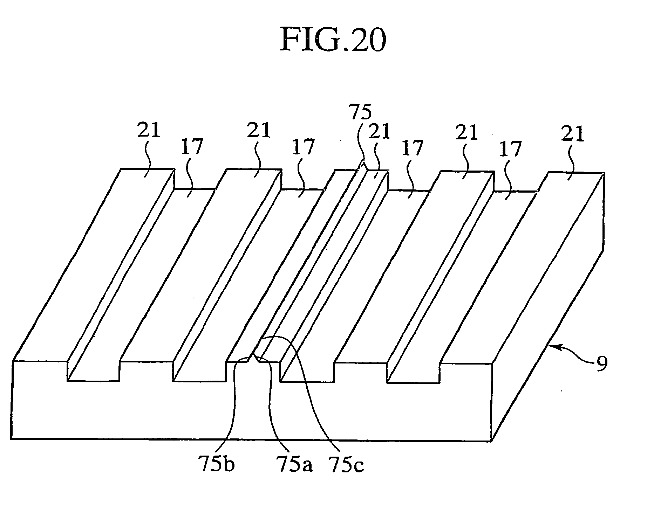

Fig. 20 is a perspective view of an anode side separator 9 of an eighteenth solid polymer electrolyte fuel cell not having all the features of the present invention. In the eighteenth fuel cell, a projection 75 is provided on a rib 21 and extending along the longitudinal direction of the rib 21. The projection 75 is formed in a triangular shape in cross section having two inclined planes 75a, 75b that cross each other to form a ridge portion 75c which comes into contact in a linear region with the porous electrode 3.

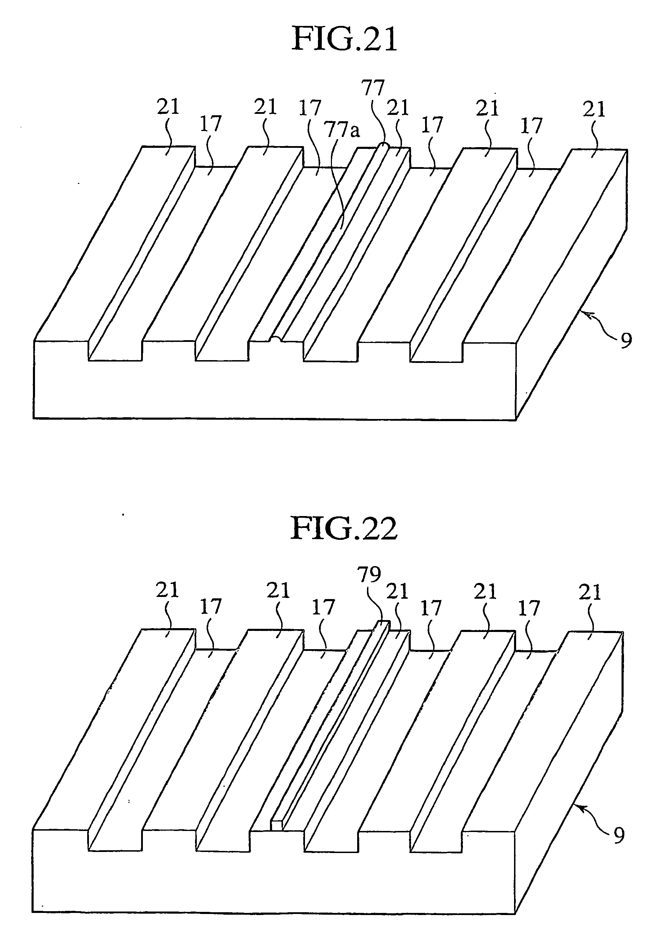

Fig. 21 is a perspective view of an anode side separator 9 of nineteenth solid polymer electrolyte fuel cell not having all the features of the present invention. In the nineteenth fuel cell, a projection 77 is provided on a rib 21 and extending along the longitudinal direction of the rib 21. The projection 77 is formed in a semi-circular shape in cross section having a cylindrical surface 77a which comes into contact in a linear region with the porous electrode 3.

In the event of selecting the projection 75 having the triangular shape in section, the porous electrode 3 can be stably crushed with a little load, and on the other hand, in the event of selecting the semi-circular projection 77, an excessive concentration of load on the porous electrode 3 can be avoided. Shape and size, for example a radius of curvature, of the projections 75, 77 can be adjusted to be suitable for molding.

Fig. 22 is a perspective view of an anode side separator 9 of a twentieth solid polymer electrolyte fuel cell not having all the features of the present invention. In the twentieth fuel cell, a projection 79 on a rib 21 is made of material different from that of the anode side separator 9.

According to the twentieth fuel cell, it becomes possible to manufacture a separator in a conventional shape without a projection on a rib 21, and thereafter, to form the projection 79 on the rib 21. In this case, it is possible to stably crush the porous electrode 3 by using a projection 79 thereon made of a flexible material.

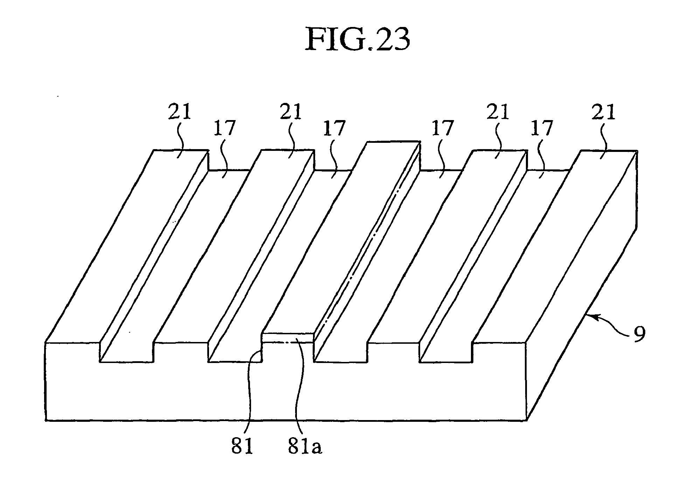

Fig. 23 is a perspective view of an anode side separator 9 of a twenty-first solid polymer electrolyte fuel cell not having all the features of the present invention. In the twenty-first fuel cell, a rib 81 in the separator 9 is taller along the entire width thereof than the other ribs 21 and a top portion 81a thereof, which is projected from the height reference of the other ribs 21, is used as a projection of the rib 81. Thereby an amount of short-circuited gas can be reduced similarly to the first fuel cell.

The preferred embodiments described herein are illustrative and not restrictive, and may be practiced or embodied in other ways without departing from the technical teaching thereof.

In a fuel cell according to a previous embodiment, at least one of the ribs 21,23 formed on separators 9, 11 which sandwich a membrane electrode assembly 7 of the fuel cell, is formed to have on its top a projection 25 which compresses and crushes a part of porous electrodes 3,5 of the membrane electrode assembly 7, when sandwiching the membrane electrode assembly 7 with the separators 9,11, to thereby restrict gas passage through the crushed part of the porous electrodes 3,5. Short-circuit of gas between gas flow paths 17,19 is thus prevented, providing even gas transportation through the entire porous electrodes 3,5, with the reaction surfaces thereof effectively used. Accordingly, performance and fuel economy of the fuel cell are improved.
Therefore, the present invention is useful for an application of a fuel cell.

The description above discloses (among others; cf. EP 1 588 447 B1) a fuel cell comprising: a membrane electrode assembly comprising an electrolyte membrane and a pair of porous electrodes provided on both sides of the electrolyte membrane; and first and second separators sandwiching the membrane electrode assembly, each of the first and second separators being formed to have, on its surface opposite to the membrane electrode assembly, a gas flow path and a rib defining the gas flow path, wherein the rib of at least one of the first and second separators is provided with a projection for pressing the porous electrode.

According to a preferred aspect, the projection is formed along the entire length of the rib.

Preferably, a plurality of the projections are provided in parallel with each other on the rib.

According to a preferred aspect, a plurality of the projections that differ in at least one of a height and a width thereof are provided on the rib.

According to another preferred aspect, at least one of a height and a width of the projection continuously changes along the longitudinal direction of the rib.

According to another preferred aspect, the ribs of the first and second separators, which are located opposite to each other, are respectively provided with the projections, wherein the projections are positioned opposed to each other.

According to a further preferred aspect, the ribs of the first and second separators, which are located opposite to each other, are respectively provided with the projections, wherein the projections are positioned shifted from each other.

According to a still further preferred aspect, the ribs of the first and second separators, which are located opposite to each other, are respectively provided with the projections, and the number of the projections on each of the ribs differs from each other.

According to a preferred aspect, the projection is configured to be in one of flat face contact, curved face contact, point contact or line contact with the porous electrode.

Preferably, the projection is made of material different from that of the first and second separators.

More preferably, the width of the projection is the same as that of the rib.

Further preferably, on at least one of the first and second separators, a plurality of gas flow paths are formed in parallel with each other to form a gas flow path bundle, wherein the projection is provided on an outermost rib that defines the gas flow path bundle.

According to a preferred aspect, on at least one of the first and second separators, a plurality of gas flow paths are formed in parallel with each other to form a gas flow path bundle, the gas flow path bundle is formed in a serpentine shape, wherein the projection is provided on the rib near a winding portion of the gas flow path bundle.

According to a further preferred aspect, a pair of interdigitated flow paths are formed on at least one of the first and second separators, each of the interdigitated flow paths includes a main flow path and a plurality of branch flow paths branched from the main flow path, the branch flow paths of the pair of the interdigitated flow paths are arranged alternately along the longitudinal direction of the main flow path, wherein the projection is provided on the rib positioned at an end of one of the branch flow paths.

Also preferably, a pair of first interdigitated flow path and second interdigitated flow path are formed on at least one of the first and second separators, each of the first and second interdigitated flow paths includes a main flow path and a plurality of the branch flow paths branched from the main flow path, the branch flow paths of the first and second interdigitated flow paths are arranged alternately along the longitudinal direction of the main flow path of one of the first and second interdigitated flow paths; at an end of the main flow path of the first interdigitated flow path, a supply port is provided for supplying gas, and at the other end of the main flow path of the second interdigitated flow path, a discharge port is provided for discharging gas; and the projection is provided on a part of the rib located between the branch flow paths of the first and second interdigitated flow paths and on a side of the discharge port with respect to the branch flow paths of the second interdigitated flow path.

Preferably, the projection is formed to be wider on the rib downstream.

More preferably, the projection is formed to be taller on the rib downstream.

Also the description above discloses an embodiment of a method of controlling gas distribution in a fuel cell which includes; a membrane electrode assembly including an electrolyte membrane and a pair of porous electrodes provided on both sides of the electrolyte membrane, and a pair of separators sandwiching the membrane electrode assembly, each of the separators being formed to have, on its surface opposite to the membrane electrode assembly, a gas flow path and a rib defining the gas flow path, the rib having a contact portion being in contact with the membrane electrode assembly, the method comprising, having a part of the contact portion of the rib projected, and pressing a part of the porous electrode with the projected part of the contact portion by sandwiching the membrane electrode assembly with the separators.

Also the description above discloses an embodiment of a fuel cell comprising: a membrane electrode assembly comprising an electrolyte membrane and a pair of porous electrodes provided on both sides of the electrolyte membrane, and first and second separators sandwiching the membrane electrode assembly, each of the first and second separators being formed to have, on its surface opposite to the membrane electrode assembly, a gas flow path and a rib defining the gas flow path, wherein on the rib of at least one of the first and second separators a projection for pressing the porous electrode is provided, and at least one of a height and a width of the projection continuously changes along the longitudinal direction of the rib.

Further preferably, only the width of the projection is continuously changed.

Also preferably, only the height of the projection is continuously changed.

According to a preferred embodiment, the projection is located on a rib of an anode side separator or a cathode side separator or on ribs of anode and cathode side separators.

## Claims

1. A fuel cell comprising:
a membrane electrode assembly (7) comprising an electrolyte membrane (1) and
a pair of porous electrodes (3, 5) provided on both sides of the electrolyte membrane (1); and
first and second separators (9, 11) sandwiching the membrane electrode assembly (7), each of the first and second separators (9, 11) being formed to have, on its surface opposite to the membrane electrode assembly (7), a gas flow path (19) and a rib (21) defining the gas flow path (19), wherein
on the rib (21) of at least one of the first and second separators (9, 11) a projection (67, 69) for pressing the porous electrode (3, 5) is provided,
**characterized in that**
at least one of a height (h7) and a width (w2) of the projection (67, 69) continuously changes along the longitudinal direction of the rib (21).

2. A fuel cell according to claim 1, **characterized in that** only the width (w2) of the projection (67) is continuously changed.

3. A fuel cell according to claim 1, **characterized in that** only the height (h7) of the projection (69) is continuously changed.

4. A fuel cell according to at least one of claims 1 to 3, **characterized in that** the projection (67, 69) is located on a rib of an anode side separator (9) or a cathode side separator (11) or on ribs of anode and cathode side separators (9, 11).

## Patentansprüche

1. Brennstoffzelle aufweisend:
eine Membran- Elektroden- Anordnung (7), aufweisend eine Elektrolyt- Membran (1) und ein Paar von porösen Elektroden (3, 5), vorgesehen auf beiden Seiten der Elektrolyt- Membran (1); und
erste und zweite Separatoren (9, 11), die dazwischen die Membran- ElektrodenAnordnung (7) aufnehmen, wobei jeder der ersten und zweiten Separatoren (9, 11) gebildet ist, um auf seiner Oberfläche, gegenüberliegend zu der Membran-Elektroden- Anordnung (7), einen Gasströmungspfad (19) und eine Rippe (21) zu haben, die den Gasströmungspfad (19) bilden, wobei
auf der Rippe (21) von zumindest einem der ersten oder zweiten Separatoren (9, 11) ein Vorsprung (67, 69) zum Pressen der porösen Elektrode (3, 5) vorgesehen ist,
**dadurch gekennzeichnet, dass**
sich zumindest eine von einer Höhe (h7) oder einer Breite (w2) des Vorsprungs (67, 69) kontinuierlich entlang der Längsrichtung der Rippe (21) ändert.

2. Brennstoffzelle nach Anspruch 1, **dadurch gekennzeichnet, dass** nur die Breite (w2) des Vorsprungs (67) kontinuierlich verändert wird.

3. Brennstoffzelle nach Anspruch 1, **dadurch gekennzeichnet, dass** nur die Höhe (h7) des Vorsprungs (69) kontinuierlich verändert wird.

4. Brennstoffzelle nach zumindest einem der Ansprüche 1 bis 3, **dadurch gekennzeichnet, dass** der Vorsprung (67, 69) auf einer Rippe eines anodenseitigen Separators (9) oder eines kathodenseitigen Separators (11) oder auf Rippen von anoden- und kathodenseitigen Separatoren (9, 11) angeordnet ist.

## Revendications

1. Pile à combustible comprenant :
un assemblage membrane / électrodes (7) comprenant une membrane électrolytique (1) et une paire d'électrodes poreuses (3, 5) prévue de part et d'autre de la membrane électrolytique (1) ; et
des premier et deuxième séparateurs (9, 11) qui prennent en sandwich l'assemblage membrane / électrodes (7), chacun des premier et deuxième séparateurs (9, 11) étant formé de façon à présenter, sur sa surface opposée à l'assemblage membrane / électrodes (7), un trajet d'écoulement de gaz (19) et une nervure (21) qui définit le trajet d'écoulement de gaz (19), dans laquelle :
sur la nervure (21) d'au moins l'un des premier et deuxième séparateurs (9, 11), on prévoit une saillie (67, 69) pour comprimer l'électrode poreuse (3, 5),
**caractérisée en ce que** :
au moins l'une parmi une hauteur (h7) et une largeur (w2) de la saillie (67, 69) change de manière continue le long de la direction longitudinale de la nervure (21).

2. Pile à combustible selon la revendication 1, **caractérisée en ce que** seule la largeur (w2) de la saillie (67) est modifiée de manière continue.

3. Pile à combustible selon la revendication 1, **caractérisée en ce que** seule la hauteur (h7) de la saillie (69) est modifiée de manière continue.

4. Pile à combustible selon au moins l'une des revendications 1 à 3, **caractérisée en ce que** la saillie (67, 69) est située sur une nervure d'un séparateur du côté anodique (9) ou un séparateur du côté cathodique (11) ou sur des nervures des séparateurs du côté anodique et cathodique (9, 11).
